# EUROPEAN PATENT APPLICATION

(11) **EP 4 703 933 A1**
(43) Date of publication of application: **04.03.2026**
(21) Application number: 24219589.9
(22) Date of filing: 12.12.2024
(51) Int. Cl.: G06F 21/57, G06F 21/64

(54) **METHODS TO TRACK PROVENANCE OF OBJECT FILES TO CREATE EXECUTABLE FILES**

(30) Priority: 26.08.2024 US 202418815473
(71) Applicant: Red Hat, Inc., Raleigh, NC 27601 (US)
(72) Inventor: DREPPER, Ulrich, Raleigh, 27601 (US)
(74) Representative: Murgitroyd & Company

(57) **Abstract**

Aspects of the present disclosure relate to the tracking of provenance of object files used to create executable files. More specifically, a method of the present disclosure includes receiving, at a computing device, a source file and a signing key as input to generate an object file. The method includes generating the object file based on the source file and the signing key. The method includes generating a signature based on content of the object file. The method includes attaching the signature to the object file.

## Description

### TECHNICAL FIELD

Aspects of the present disclosure relate to object files, and more particularly, to the tracking of provenance of object files used to create executable files.

### BACKGROUND

Public key cryptography is a cryptographic system that utilizes pairs of related keys, a public key and a corresponding private key. Cryptographic algorithms are utilized to generate the key pairs. Distribution of the public key may be done in an open manner without compromising security, so long as the corresponding private key is kept secure. Any party with a public key may encrypt a package, but decryption of the package is performed by a party using the corresponding private key, in order to obtain the original package. For example, a first party may publicize a public key of the key pairs such that other parties may send the first party encrypted messages encrypted using the public key. The first party may decrypt the encrypted messages using the corresponding private key, such that any eavesdropping party that intercepts the encrypted message is unable to decrypt the encrypted message.

In cryptographic signature systems, a sender may use a private key along with a message to generate a cryptographic signature. Any party with the public key may utilize the public key to verify that the cryptographic signature corresponds to the message. However, a party that does not have the private key will not be able to file a message or cryptographic signature pair that will pass verification with the public key. For example, computers may have software installed on the computer that includes the public key, such that an update to the software may be provided to the computer and is signed using the corresponding private key. The computer that receives the update may determine that the update is genuine by verifying the cryptographic signature using the public key. So long as the private key is kept secret, a malicious party will not be able to inject or distribute a malicious update as a genuine update to computers without the private key.

### SUMMARY

According to a first aspect of the disclosure, there is provided a method, comprising: receiving, at a computing device, a source file and a signing key as input to generate an object file; generating the object file based on the source file and the signing key; generating a signature based on content of the object file; and attaching the signature to the object file.

Generating the signature may comprise computing a hash sum of the content of the object file.

The method may further comprise combining the object file with a set of object files, wherein the set of object files comprises at least one object file. The method may further comprise verifying, by the computing device, the signature of each of the at least one object file within the set of object files prior to combining each of the at least one object file within the set of object files. Verifying the signature may be based on a verification key to determine that each of the at least one object file is a valid object file. The verification key may be comprised within a set of verification keys, and the set of verification keys may be stored within a database.

A program file may be generated based on the set of object files in response to each of the at least one object file being verified as being a valid object file.

A program file may be not generated based on the set of object files in response to the at least one object file not being verified as being a valid object file, wherein a failure to verify the at least one object file is considered as insertion of invalid object code.

According to a second aspect of the disclosure, there is provided a system, comprising a memory and a processing device, operatively coupled to the memory, configured to: receive, at a computing device, a source file and a signing key as input to generate an object file; generate the object file based on the source file and the signing key; generate a signature based on content of the object file; and attach the signature to the object file.

To generate the signature the processing device may be configured to compute a hash sum of the content of the object file.

The processing device may be further configured to combine the object file with a set of object files, wherein the set of object files comprises at least one object file. The processing device may be further configured to verify the signature of each of the at least one object file within the set of object files prior to combining each of the at least one object file within the set of object files. Verifying the signature may be based on a verification key to determine that each of the at least one object file is a valid object file. The verification key may be comprised within a set of verification keys, and the set of verification keys may be stored within a database.

A program file may be generated based on the set of object files in response to each of the at least one object file being verified as being a valid object file.

A program file may be not generated based on the set of object files in response to the at least one object file not being verified as being a valid object file, wherein a failure to verify the at least one object file is considered as insertion of invalid object code.

According to a third aspect of the disclosure, there is provided a non-transitory computer-readable medium having instructions stored thereon which, when executed by a processing device, cause the processing device to carry out the method of the first aspect. The instructions may cause the processing device to: receive, at a computing device, a source file and a signing key as input to generate an object file; generate the object file based on the source file and the signing key; generate a signature based on content of the object file; and attach the signature to the object file.

To generate the signature the instructions may cause the processing device to compute a hash sum of the content of the object file.

The instructions may further cause the processing device to combine the object file with a set of object files, wherein the set of object files comprises at least one object file. The instructions may further cause the processing device to verify the signature of each of the at least one object file within the set of object files prior to combining each of the at least one object file within the set of object files. Verifying the signature may be based on a verification key to determine that each of the at least one object file is a valid object file. The verification key may be comprised within a set of verification keys, and the set of verification keys may be stored within a database.

A program file may be generated based on the set of object files in response to each of the at least one object file being verified as being a valid object file.

A program file may be not generated based on the set of object files in response to the at least one object file not being verified as being a valid object file, wherein a failure to verify the at least one object file is considered as insertion of invalid object code.

### BRIEF DESCRIPTION OF THE DRAWINGS

The described aspects and the advantages thereof may best be understood by reference to the following description taken in conjunction with the accompanying drawings. These drawings in no way limit any changes in form and detail that may be made to the described aspects by one skilled in the art without departing from the spirit and scope of the described aspects.
FIG. 1 is a block diagram that illustrates an example system in accordance with some aspects of the present disclosure.
FIG. 2 is a block diagram that illustrates an example of tracking the provenance of object files used to create executable files in accordance with some aspects of the present disclosure.
FIG. 3 is a block diagram that illustrates an example system in accordance with some aspects of the present disclosure.
FIG. 4 is a flow diagram of a method for tracking the provenance of object files used to create executable files in accordance with some aspects of the present disclosure.
FIG. 5 is a block diagram of an example of a computer system that may perform one or more of the operations described herein in accordance with some aspects of the present disclosure.

### DETAILED DESCRIPTION

In some instances, many sources may be used to build binaries for distribution. However, the many sources may not always be fully trusted. For example, attacks on systems (e.g., supply chain attacks) may inject malicious software in an effort to compromise the security of such systems. When building a distribution from sources it may be difficult to establish that all the object files used are built by trusted tools in a trusted environment.

The present disclosure addresses the above-noted and other deficiencies by using a processing device to track the provenance of object files used to create executable files. In an example, the processing device receives, at a computing device, a source file and a signing key as input to generate an object file. The processing device generates the object file based on the source file and the signing key. The processing device generates a signature based on content of the object file. The processing device attaches the signature to the object file. Vis-à-vis receiving the source file and signing key to generate the object file based on the source file and the signing key, generating a signature based on content of the object file, and attaching the signature to the object file, the processing device may facilitate the tracking of the provenance of object files used to create executable files. For instances, the processing device may track how individual object files are created and whether they are created using trusted tools in a trusted environment.

When creating a distribution package, the produced and distributed binaries should have a known provenance. Everything that is compiled from the sources and everything that is not source code is just data and not code and should not be allowed to be executed by the nature of how the data is embedded in the final result. If every binary code is produced in a build system, additional steps can be taken to record the fact that the tools in the build system are used. By embedding a signed digest of relevant parts of a relocatable binary file, the user of those files (e.g., the linker to build executable or DSOs) can detect whether the file has been tempered with and/or whether an authorized tool was used to produce the relocatable binary. In such instances, a linking step of the build progress can be made to fail when any unauthorized relocatable file is used in the production of the resulting executable or DSO.

In some aspects, the tools (e.g., assembler, linker) may be modified to include additional functionality to track the provenance of object files used to create executable files. In some aspects, infrastructure may be created to be used with the build tools to extend the capabilities of existing tools (e.g., assembler, linker) to perform the necessary actions and checks to track the provenance of object files used to create executable files.

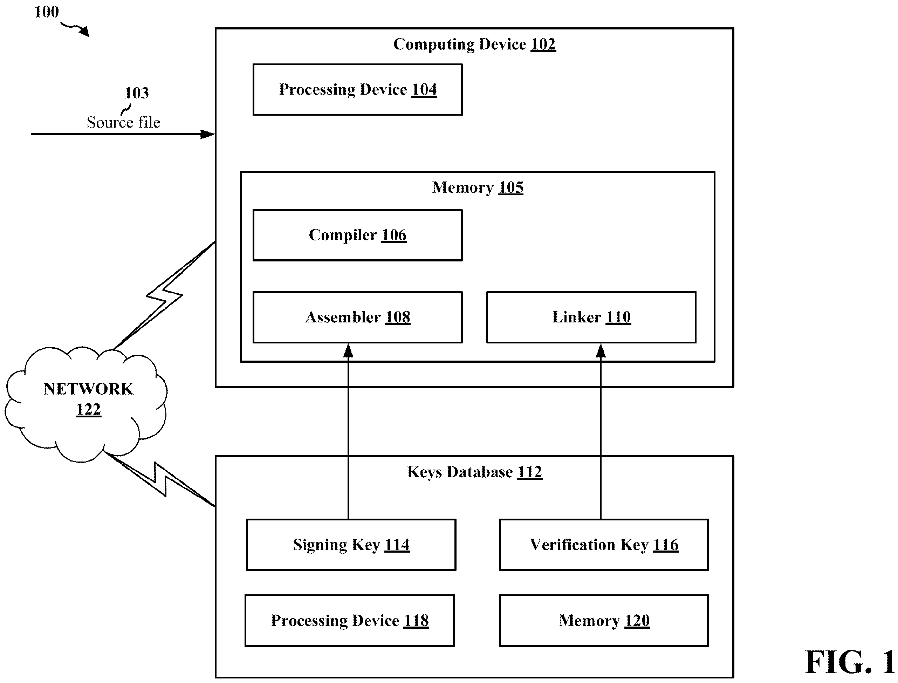

FIG. 1 is a block diagram that illustrates the example system 100 in accordance with some aspects of the present disclosure. The system 100 may include a computing device 102 and a keys database 122. The computing device 102 (and the keys database 112) may each include hardware such as processing device 104 (e.g., processors, central processing units (CPUs)) and memory 105 (e.g., random access memory (RAM), hard-disk drive (HDD), persistent storage) as well as other hardware devices (e.g., network interfaces, sound card, video card, etc.- not shown). A persistent storage may be a local storage unit or a remote storage unit. Persistent storage may be a magnetic storage unit, optical storage unit, solid state storage unit, electronic storage units (main memory), or similar storage unit. Persistent storage may also be a monolithic/single device or a distributed set of devices. The processing device 104 may be operatively coupled to the memory 105.

The computing device 102 and the key database 112 may communicate with one another (and/or with other devices) via a network 122. The network may be a public network (e.g., the internet), a private network (e.g., a local area network (LAN) or wide area network (WAN)), or a combination thereof. In one example, the network may include a wired or a wireless infrastructure, which may be provided by one or more wireless communications systems, such as a WiFi^{™} hotspot connected with the network and/or a wireless carrier system that can be implemented using various data processing equipment, communication towers (e.g., cell towers), etc. The network 122 may carry communications (e.g., data, message, packets, frames, etc.) between the computing device 102 and the key database 112 (and/or between the other devices). The computing device 102 and the key database 112 may also include one or more sensors (e.g., temperature sensors, moisture sensors, etc. - not shown).

In some aspects, the computing device 102 and the key database 112 may each comprise any suitable type of computing device or machine that has a programmable processor (e.g., processing device 104) including, for example, server computers, desktop computers, laptop computers, tablet computers, smartphones, set-top boxes, etc. The computing device 102 and the key database 112 may each execute or include an operating system (OS). The OS may manage the execution of other components (e.g., software, applications, etc.) and/or may manage access to the hardware (e.g., processors, memory, storage devices etc.) of a device in the computing device 102 and the key database 112.

The computing device 102 and/or the key database 112 may be implemented by a common entity/organization or may be implemented by different entities/organizations. For example, computing device 102 may be operated by a first company/corporation and the key database 112 may be operated by a second company/corporation.

The computing device 102 may further include compiler 106, assembler 108, and linker 110. Each of the compiler 106, assembler 108 and linker 110 may comprise software/logic stored on memory 105 that is executed by the processing device 104 to perform their corresponding function. In an example, the processing device may execute compiling instructions to cause the compiler 106 to compile the source file 103 and generate an assembler source file. In an example, the processing device may execute assembling instructions to cause the assembler 108 to generate an object file based on the assembler source file. In an example, the processing device may execute linking instructions to cause the linker 110 to generate a program file based on a set of object files. In some alternate embodiments, each of the compiler 106, assembler 108 and linker 110 may comprise dedicated hardware.

The processing device 104 (executing compiler 106, assembler 108 and/or linker 110) is to receive, at the computing device 102, a source file 103 and a signing key 114 as input to generate an object file. The processing device 104 is to generate the object file based on the source file 103 and the signing key 114. The processing device 104 is to generate a signature based on content of the object file. The processing device 104 is to attach the signature to the object file.

In some aspects, the processing device 104, verifies, by the computing device 102, the signature of each of the at least one object file within the set of object files prior to combining each of the at least one object file within the set of object files. The verification the signature is based on a verification key 116 to determine that each of the at least one object file is a valid object file. In some aspects, the verification key 116 includes one or more verification keys. In some aspects, the verification key 116 includes a corresponding verification key for each of the at least one object file within the set of object files.

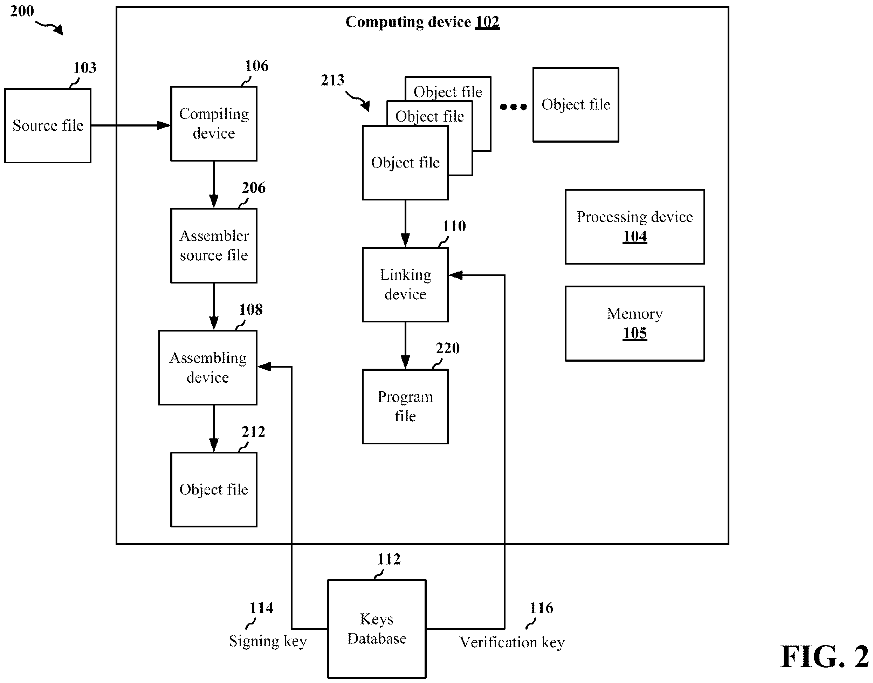

FIG. 2 is a block diagram that illustrates the example system 100 of FIG. 1 in accordance with some aspects of the present disclosure. In the example depicted in FIG. 2, the compiling device 106 may receive a source file 103. The compiling device 106 compiles the source file 103 and generates an assembler source file 206. The assembling device 108 receives the assembler source file 206 from the compiling device 106, and also receives signing key 114 from keys database 112. The assembler 208 generates an object file 212 based on the source file 206 and the signing key 114. The assembler 208 generates a signature based on the content of the object file and attaches the signature to the object file. In some aspects, the assembler computes a hash sum of the content of the object file and generates the signature based on the has sum.

In some aspects, signing keys may be replaced or cycled and stored on the keys database 112, such that the keys database is utilized to associate a build with a signing key 114, where build is the process of building a package. In some aspects, a signing key may be stored for each build. In some aspects, an identifier of a first build is stored to use a new signing key. In such instances, a seed for generating the signing key is stored instead of the signing key themselves.

In some aspects, the assembler may assemble the object file based on the assembler source file, and then adds at least one additional section with the build identifier and the signature. The signature uses public key functionality to generate a signing key and a verification key using the seeds. A digest or hash of all the relevant content of the relocatable file is signed.

In some aspects, a set of object files 213 comprising at least one object file 212 may be utilized by a linker 216 to generate a program file 220. The linker 216 may check that each object file 212 within the set of object files 213 was generated using trusted tools in a trusted system, such that the linker 216 can verify that each object file 212 within the set of object files 213 are valid object files and not compromised object files. As such, the one or more verification keys 116 are made available to the linker 216, such that the linker 216 can verify that each object file 212 within the set of object files 213 is a valid object file. The linker 216 may utilize the verification key 116 to check that the content of the object file has not been modified. The linker 216 verifies the signature generated by the assembler by using the respective verification key 116 used during the compilation. The linker 216 checks whether each object file has been legitimately created. Since there are a defined set of keys which are available, keys which are legitimately used in the construction of the entire system, the linker may determine that each object file within the set of object files are actually created by trusted tools of the system. As such, compromised files or files that have no signature attached or have been modified would be created using a key which is not known to the entire system and therefore would not pass the verification at the linker and would fail. The linker automatically detects the failure and the executable file will not be created by the linker.

In some aspects, the linker utilizes an audit library, such that when the linker finished not only is the resulting binary created but a wrapper is provided comprising a list of relocatable object files used in the process and their build IDs and signatures. This allows the wrapper, which can look up the verification key from the build ID, to compare the digest produced from the actual relocatable file used with the signed digest that the file contains. In case of a discrepancy the respective relocatable file is not produced in the build system or has been tempered with. An audit library monitors the file loading of the linker and records all the relocatable files the linker opens, which may include relocatable files in archives. All the relocatable files from the content of the two new sections added in the assembler are extracted and the result is written to a file that is indicated and readable by the linker. During the operation, a keys database of the used keys is created and maintained. Access to the keys database is available, as needed, during link operations.

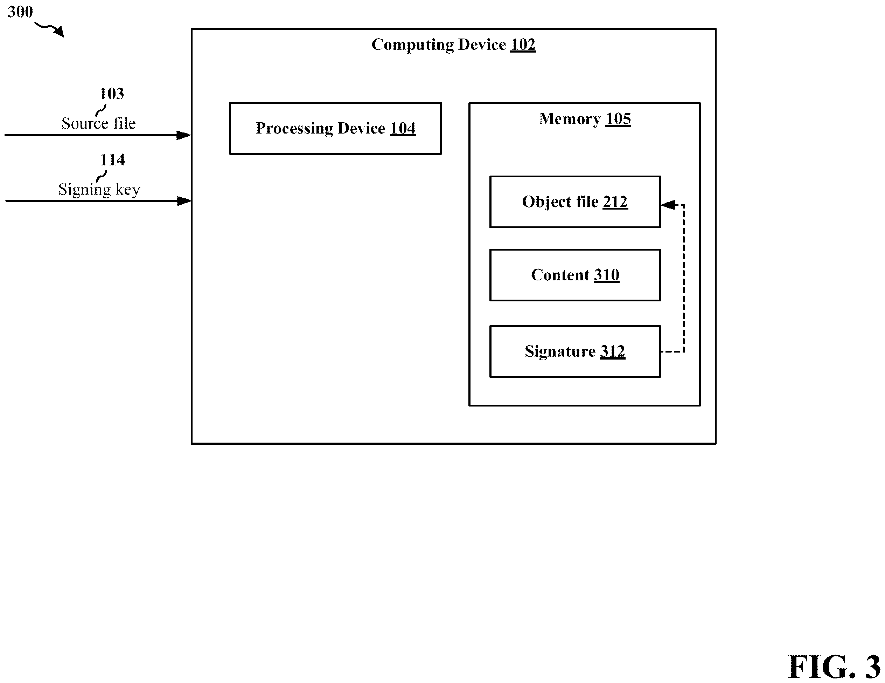

FIG. 3 is a block diagram 300 that illustrates the computing device 102 in accordance with some aspects of the present disclosure. The computing device 102 includes a processing device 104 and a memory 105. The processing device 104 is operatively coupled to the memory 105.

The processing device 104 is to receive, at a computing device 102, a source file 103 and a signing key 114 as input to generate an object file 212. The processing device 104 is to generate the object file 212 based on the source file 103 and the signing key 114. The processing device 104 is to generate a signature 312 based on content 310 of the object file 212. The processing device 104 is to attach the signature 312 to the object file 212.

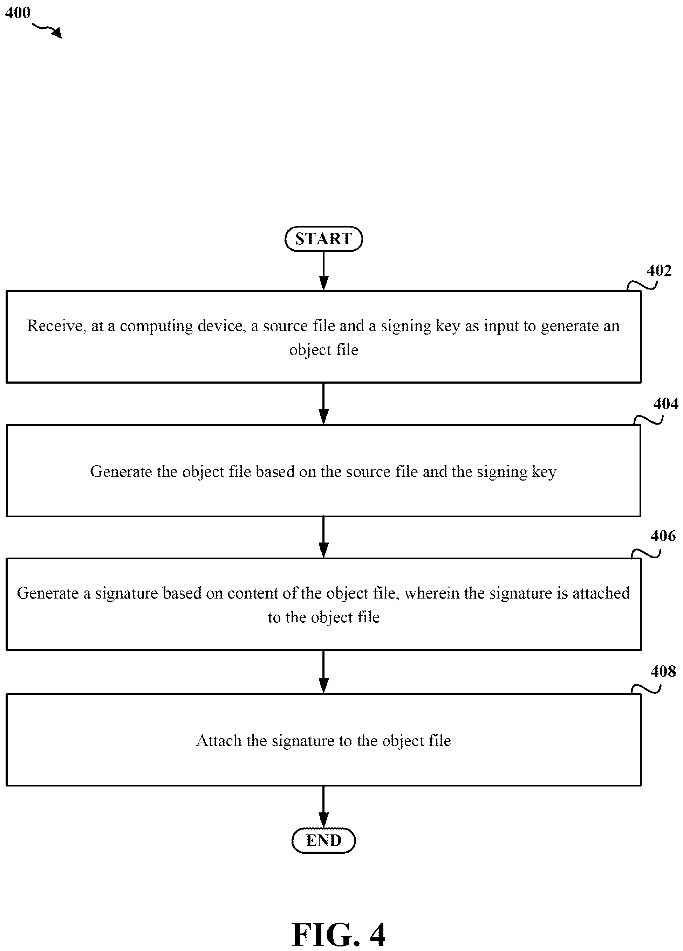

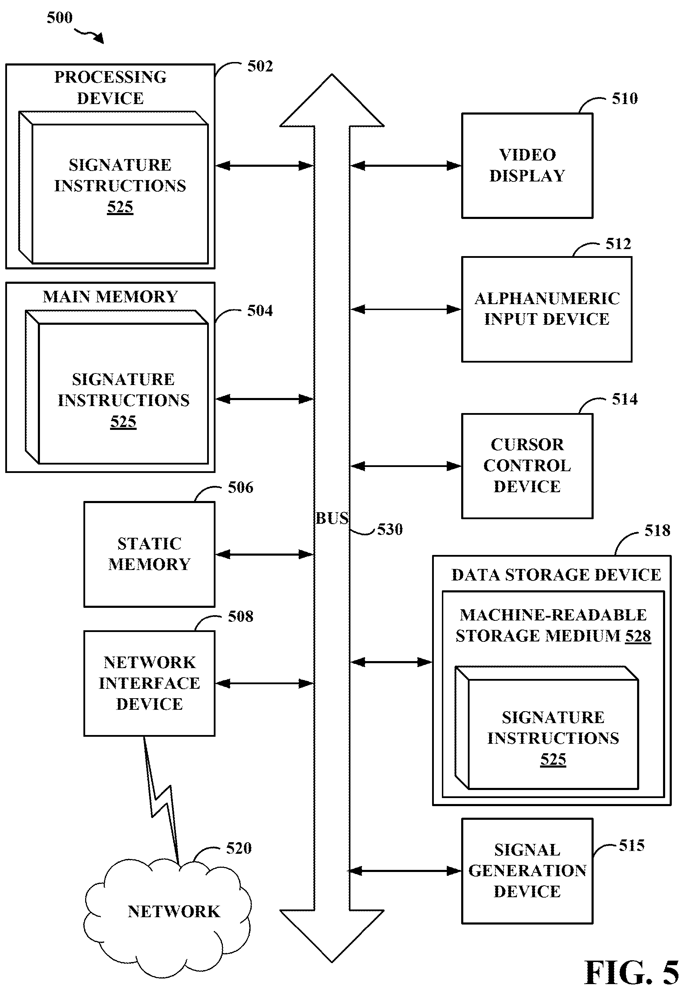

FIG. 4 is a flow diagram of a method 400 for the tracking of provenance of object files used to create executable files in accordance with some aspects of the present disclosure. The method 400 may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some aspects, the method 400 may be performed by a computing device (e.g., computing device 102). For instance, the method 400 may be performed by the processing device 104. In some aspects, the method 400 may be performed by the machine depicted in FIG. 5. In some aspects, the method 400 may be performed by a device depicted in FIG. 1.

At block 402, a computing device (of a device), receives a source file and a signing key as input to generate an object file. In an example, the device may be the assembler 108 of FIG. 1 or the assembling device 108 of FIG. 2. In an example, the source file may be an assembly source file generated by a compiling device, which generates the assembly source file based on an input source file. In an example, the signing key is received by the device from a keys database. The keys database may be keys database 112.

At block 404, the computing device generates the object file based on the source file and the signing key. In an example, as shown in FIG. 1, the signing key may include the signing key 114 provided by the keys database 112 to the assembler 108. In another example, as shown in FIG. 2, the signing key may include the signing key 114 provided by the keys database 112 to the assembling device 108. In an example, the object file may include the object file 212 generated by assembling device 108.

At block 406, the computing device generates a signature based on content of the object file. In an example, the signature may include signature 312.

At block 408, the computing device attaches the signature to the object file. In an example, the signature 312 may be included within the object file 212. In another example, the signature may be included within an object file generated by assembling device 108.

In some aspects, the computing device, to generate the signature may compute a hash sum of the content of the object file. The signature may be utilized to determine that the content of the object file has not been modified. In an example, the aforementioned aspects may correspond to aspects described in the description of FIG. 1.

In some aspects, the computing device may combine the object file with a set of object files, where the set of object files comprises at least one object file. In an example, the set of object files may include the set of object files 213, where the set of object files 213 comprises at least one object file.

In some aspects, the computing device may verify the signature of each of the at least one object file within the set of object files prior to combining each of the at least one object file within the set of object files. In an example, the linker 110 may verify the signature of each of the at least one object file within the set of object files prior to combining each of the at least one object file within the set of object files. In an example, the linker 110 of the computing device 102 may verify the signature of each of the at least one object file within the set of object files prior to combining each of the at least one object file within the set of object files. The verification of the signature may be based on a verification key to determine that each of the at least one object file is a valid object file. The verification key may be comprised within a set of verification keys, where the set of verification keys are stored within a database. In some aspects, a program file may be generated based on the set of object files in response to each of the at least one object file being verified as being a valid object file. In some aspects, a program file is not generated based on the set of object files in response to at least one object file not being verified as being a valid object file, where a failure to verify the at least one object file is considered as insertion of invalid object code. In an example, the aforementioned aspects may correspond to aspects described in the description of FIG. 1.

FIG. 5 illustrates a diagrammatic representation of a machine in the example form of a computer system 500 within which a set of instructions, for causing the machine to perform any one or more of the methodologies discussed herein for the tracking of provenance of object files used to create executable files. More specifically, the machine may receive, at a computing device, a source file and a signing key as input to generate an object file; generate the object file based on the source file and the signing key; generate a signature based on content of the object file; and attach the signature to the object file.

In alternative aspects, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or a bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In one aspect, the computer system 500 may be representative of a server.

The computer system 500 includes a processing device 502, a main memory 504 (e.g., read-only memory (ROM), flash memory, dynamic random access memory (DRAM), a static memory 506 (e.g., flash memory, static random access memory (SRAM), etc.), and a data storage device 518, which communicate with each other via a bus 530. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

The computer system 500 may further include a network interface device 508 which may communicate with a network 520. The computer system 500 also may include a video display unit 510 (e.g., a liquid crystal display (LCD) or a cathode ray tube (CRT)), an alphanumeric input device 512 (e.g., a keyboard), a cursor control device 514 (e.g., a mouse), and a signal generation device 515 (e.g., a speaker). In one example, the video display unit 510, the alphanumeric input device 512, and the cursor control device 514 may be combined into a single component or device (e.g., an LCD touch screen).

The processing device 502 represents one or more general-purpose processing devices such as a microprocessor, a central processing unit, or the like. More particularly, the processing device 502 may be a complex instruction set computing (CISC) microprocessor, a reduced instruction set computer (RISC) microprocessor, a very long instruction word (VLIW) microprocessor, or a processor implementing other instruction sets, or processors implementing a combination of instruction sets. The processing device 502 may also be one or more special-purpose processing devices such as an application specific integrated circuit (ASIC), a field programmable gate array (FPGA), a digital signal processor (DSP), a network processor, or the like. The processing device 502 is configured with signature instructions 525, for performing the operations and steps discussed herein. For example, the signature instructions 525 may include instructions for tracking of provenance of object files used to create executable files.

The data storage device 518 may include a machine-readable storage medium 528 storing signature instructions 525 (e.g., software) embodying any one or more of the methodologies of functions described herein. The signature instructions 525 may also reside, completely or partially, within the main memory 504 or within the processing device 502 during execution thereof by the computer system 500; the main memory 504 and the processing device 502 also constituting machine-readable storage media. The signature instructions 525 may further be transmitted or received over the network 520 via the network interface device 508.

The machine-readable storage medium 528 may also be used to store the signature instructions 525 to perform a method for tracking of provenance of object files used to create executable files, as described herein. While the machine-readable storage medium 528 is shown in an exemplary aspect to be a single medium, the term "machine-readable storage medium" should be taken to include a single medium or multiple media (e.g., a centralized or distributed database, or associated caches and servers) that store the one or more sets of instructions. A machine-readable storage medium includes any mechanism for storing information in a form (e.g., software, processing application) readable by a machine (e.g., a computer). The machine-readable storage medium may include, but is not limited to, a magnetic storage medium (e.g., floppy diskette), an optical storage medium (e.g., CD-ROM), a magneto-optical storage medium, a read-only memory (ROM), random-access memory (RAM), erasable programmable memory (e.g., EPROM and EEPROM), flash memory, or another type of medium suitable for storing electronic instructions.

The preceding description sets forth numerous specific details such as examples of specific systems, components, methods, and so forth, in order to provide a good understanding of several aspects of the present disclosure. It will be apparent to one skilled in the art, however, that at least some aspects of the present disclosure may be practiced without these specific details. In other instances, well-known components or methods are not described in detail or are presented in simple block diagram format in order to avoid unnecessarily obscuring the present disclosure. Thus, the specific details set forth are merely exemplary. Particular aspects may vary from these exemplary details and still be contemplated to be within the scope of the present disclosure.

Additionally, some aspects may be practiced in distributed computing environments where the machine-readable medium is stored on and or executed by more than one computer system. In addition, the information transferred between computer systems may either be pulled or pushed across the communication medium connecting the computer systems.

Aspects of the claimed subject matter include, but are not limited to, various operations described herein. These operations may be performed by hardware components, software, firmware, or a combination thereof.

Although the operations of the methods herein are shown and described in a particular order, the order of the operations of each method may be altered so that certain operations may be performed in an inverse order or so that certain operation may be performed, at least in part, concurrently with other operations. In another aspect, instructions or sub-operations of distinct operations may be in an intermittent or alternating manner.

The above description of illustrated implementations of the invention, including what is described in the Abstract, is not intended to be exhaustive or to limit the invention to the precise forms disclosed. While specific implementations of, and examples for, the invention are described herein for illustrative purposes, various equivalent modifications are possible within the scope of the invention, as those skilled in the relevant art will recognize. The words "example" or "exemplary" are used herein to mean serving as an example, instance, or illustration. Any aspect or design described herein as "example" or "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or". That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an aspect" or "one aspect" or "an implementation" or "one implementation" throughout is not intended to mean the same aspect or implementation unless described as such. Furthermore, the terms "first," "second," "third," "fourth," etc. as used herein are meant as labels to distinguish among different elements and may not necessarily have an ordinal meaning according to their numerical designation. Unless specifically stated otherwise, terms such as "receiving," "generating," "computing," "combining," "verifying," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices.

It will be appreciated that variants of the above-disclosed and other features and functions, or alternatives thereof, may be combined into may other different systems or applications. Various presently unforeseen or unanticipated alternatives, modifications, variations, or improvements therein may be subsequently made by those skilled in the art which are also intended to be encompassed by the following claims. The claims may encompass aspects in hardware, software, or a combination thereof.

## Claims

1. A method, comprising:
receiving, at a computing device, a source file and a signing key as input to generate an object file;
generating the object file based on the source file and the signing key;
generating a signature based on content of the object file; and
attaching the signature to the object file.

2. The method of claim 1, wherein generating the signature comprises computing a hash sum of the content of the object file.

3. The method of claim 1, further comprising combining the object file with a set of object files, wherein the set of object files comprises at least one object file.

4. The method of claim 3, further comprising verifying, by the computing device, the signature of each of the at least one object file within the set of object files prior to combining each of the at least one object file within the set of object files.

5. The method of claim 4, wherein the verifying the signature is based on a verification key to determine that each of the at least one object file is a valid object file.

6. The method of claim 5, wherein the verification key is comprised within a set of verification keys, wherein the set of verification keys are stored within a database.

7. The method of claim 4, wherein a program file is generated based on the set of object files in response to each of the at least one object file being verified as being a valid object file.

8. The method of claim 4, wherein a program file is not generated based on the set of object files in response to the at least one object file not being verified as being a valid object file, wherein a failure to verify the at least one object file is considered as insertion of invalid object code.

9. A system, comprising:
a memory; and
a processing device, operatively coupled to the memory, configured to:
receive, at a computing device, a source file and a signing key as input to generate an object file;
generate the object file based on the source file and the signing key;
generate a signature based on content of the object file; and
attach the signature to the object file.

10. The system of claim 9, wherein to generate the signature the processing device is configured to compute a hash sum of the content of the object file.

11. The system of claim 9, wherein the processing device is further configured to combine the object file with a set of object files, wherein the set of object files comprises at least one object file.

12. The system of claim 11, wherein the processing device is further configured to
verify the signature of each of the at least one object file within the set of object files prior to combining each of the at least one object file within the set of object files.

13. The system of claim 12, wherein at least one of:
verification of the signature is based on a verification key to determine that each of the at least one object file is a valid object file, and optionally wherein the verification key is comprised within a set of verification keys, the set of verification keys being stored within a database;
a program file is generated based on the set of object files in response to each of the at least one object file being verified as being a valid object file; and
a program file is not generated based on the set of object files in response to the at least one object file not being verified as being a valid object.

14. A non-transitory computer-readable medium having instructions stored thereon which, when executed by a processing device, cause the processing device to carry out the method of any of claims 1 to 8.
